# EUROPEAN PATENT SPECIFICATION

(11) **EP 0 369 596 B1**
(45) Date of publication and mention of the grant of the patent: **11.05.1994**
(21) Application number: 89310368.9
(22) Date of filing: 11.10.1989
(51) Int. Cl.: H04N 1/40

(54) **Discriminating regions of an image**
Unterscheidung von Bildbereichen
Discrimination de régions d'image

(30) Priority: 15.11.1988 GB 8826690
(43) Date of publication of application: 23.05.1990
(73) Proprietor: CROSFIELD ELECTRONICS LIMITED, Hemel Hempstead Hertfordshire HP2 7RH (GB)
(72) Inventor: Kirk, Richard Anthony, Redbourn Hertfordshire AN3 7NL (GB)
(74) Representative: Skone James, Robert Edmund

(56) References cited:
- US-A- 4 403 257
- US-A- 4 741 046
- PATENT ABSTRACTS OF JAPAN, vol. 9, no. 85 (E-308)[1808], 13th April 1985;& JP-A-59 216 373 (CANON K.K.) 06-12-1984
- PATENT ABSTRACTS OF JAPAN, vol. 11, no. 117 (E-498)[2564], 11th April 1987;& JP-A-61 263 364 (RICOH CO. LTD) 21-11-1986

## Description

The invention relates to methods and apparatus for discriminating half-tone regions of an image from other regions such as continuous tone, text, solid ink, and the like regions.

If data representing an image is to be compressed it is desirable to apply different compression algorithms to continuous tone and black and white dot (screened) data respectively. The best spatial filter to apply to a scanned in image depends on whether the original image was screened or continuous tone. There are many other such processes where the approach is dependent on the type of image representation. The known methods for detecting the type of image representation typically involve transforming the image data into the frequency domain or applying autocorrelation techniques. Both of these are complex, time consuming and not sensitive to sudden changes in image data type.

JP-A-59216373 describes a device for separating a picture into binary and half-tone display areas by comparing an image area separating parameter with the difference of maximum and minimum picture element density levels in a block.

JP-A-61263364 is a method for space filter processing by allocating individual threshold values. Picture signals for each of red, green and blue are read and a density pattern processing circuit generates binary dot patterns for 8x8 picture elements from each 6-bit data of Yellow, Magenta, Cyan and Black and executes threshold matrix processing for each colour.

Their discrimination is of text features as opposed to between half-tone dots and normal large text in a grey level scan.

In accordance with one aspect of the present invention, a method of discriminating between regions of an image, the image being represented by values defining the colour component content of pixels of the image, characterized in that the method comprises comparing a value from each pixel with those of its neighbours to locate pixels whose values define turning points; and discriminating between regions of the image by obtaining the number of turning points present in the region; comparing the number of turning points with a predetermined threshold, and thereby defining the region according to the result of the comparison.

In accordance with a second aspect of the present invention, apparatus for discriminating between regions of an image, the image being represented by values defining the colour component content of pixels of the image characterised in that the apparatus comprises first comparison means for comparing a value from each pixel with those of its neighbours to locate pixels whose values define turning points; and discrimination means for discriminating between regions of the image by obtaining the number of turning points present in the region; second comparison means for comparing the number of turning points with a predetermined threshold, whereby the region is defined according to the result of the comparison.

This invention avoids the problems of the prior art by not requiring the transformation of the data into the frequency domain or the use of autocorrelation techniques.

The turning points may comprise one or more, preferably all of maxima, minima and saddle points. A maximum occurs when the pixel value is greater than the neighbouring region; a minimum occurs when the pixel value is less than the neighbouring region; and a saddle point occurs when the pixel value is a maximum relative to one part of the neighbouring region and a minimum relative to another part of the neighbouring region. In the case of an orthogonal array of pixels a saddle point may be defined as occurring when the pixel value is a maximum in one direction and a minimum in the perpendicular direction.

To avoid noise generating artificial turning points in regions of flat tint, only those turning points that are greater or less than their neighbours by a value greater than a fixed threshold may be chosen.

Typically, in the case of a coloured image defined by more than one colour component, the method will be carried out on one of the colour components. However, the method could be performed on all colour components separately or the turning points for all the components could be summed for each pixel.

Preferably, the comparison step is carried out by comparing the digital value of the pixel with its immediate neighbours which, in the case of an orthogonal array, will comprise the neighbours in the two orthogonal directions.

Preferably, the method further comprises, following the comparison step, generating a turning point map of the image in which each pixel has one of two values depending on whether it has been found to define a turning point or not. For example, all pixels in the map corresponding to pixels which are found not to define a turning point could be set to zero while those pixels corresponding to pixels found to define turning points could be set to some non-zero value.

The discriminating step may comprise passing a window of predetermined dimensions across the image, at each position of the window counting the number of turning points within the window, comparing the number of turning points within the window with a threshold, and, if the threshold is exceeded, causing the pixel or pixels at the centre of the window to be indicated as a turning point.

In an alternative method the number of turning points in the window can be used to provide a measure of the nature of the region of the image, being low in text regions and high in halftone dot regions. Where a binary decision is necessary this can then be compared to a threshold appropriate to the screen pitch and scanner. There are numerous fast algorithms that may achieve the equivalent of summing over a window with less effort such as separating this convolution into two one-dimensional components.

Having performed the discrimination, the further type-sensitive steps may then be carried out such as compressing the original data with reference to the result of the discrimination step which will indicate the screened regions and the other non-screened regions.

Normally, the values associated with each pixel will be digital values, defining for example density values of the colour component concerned although other characteristics such as luminosity, transmittance or percentage dot could also be used.

An example of a method and apparatus according to the present invention will now be described with reference to the accompanying drawings, in which:-
Figure 1 is a schematic block diagram of the apparatus;

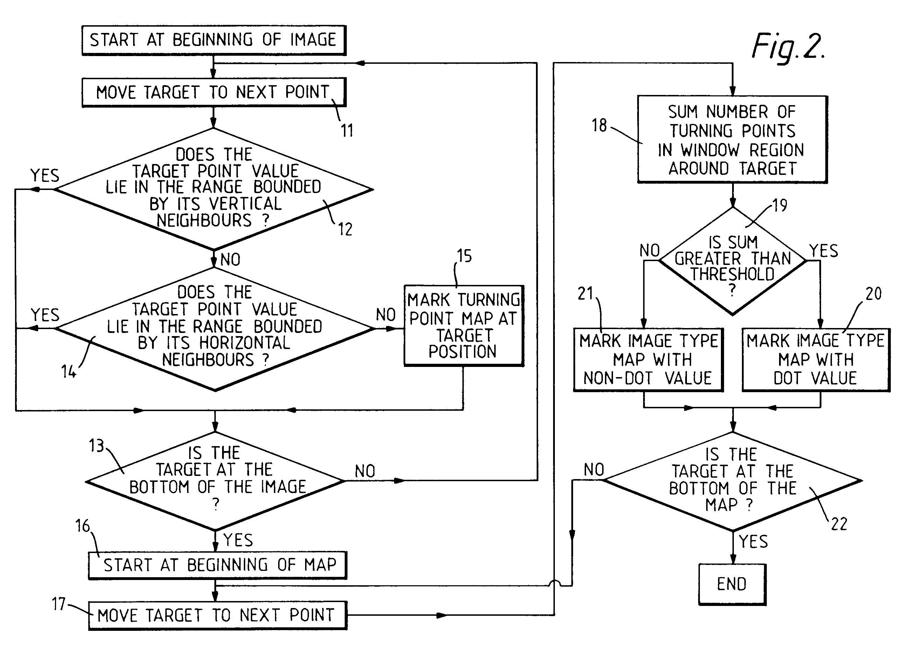

Figure 2 is a flow diagram illustrating operation of the microprocessor shown in Figure 1;
Figures 3A and 3B illustrate the digital representations of parts of two different images with the turning points underlined; and,
Figures 4A and 4B illustrate the turning point maps for the two images shown in Figure 3 after the final determination step.

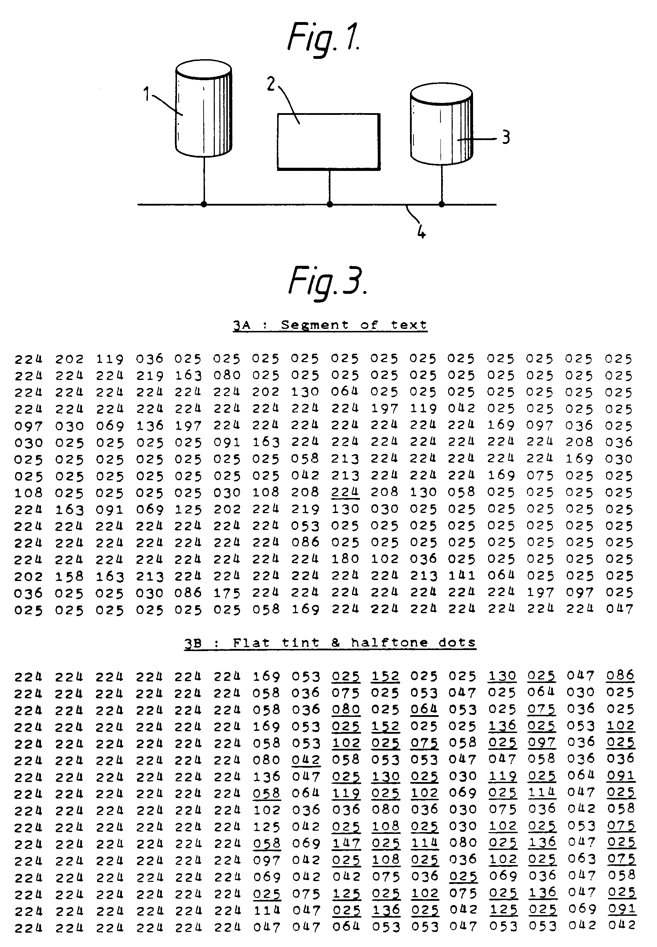

Initally, a store 1 (Figure 1) contains digital data defining the intensity of individual pixels of an image, the intensity values typically lying in the range 0-255. In general, each pixel will be represented by more than one digital value corresponding to more than one colour component although the method will be performed on just one of the colour components.

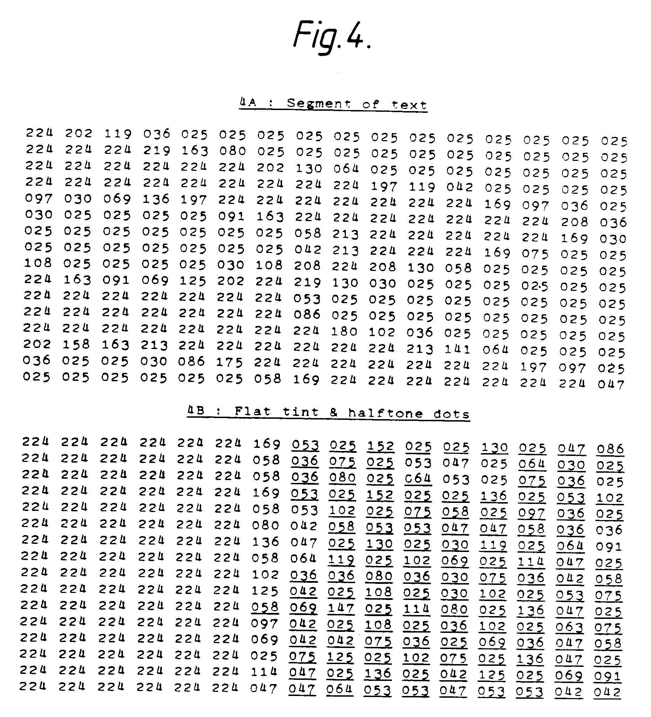

Figure 3A illustrates the data (grey level values) defining part of a colour separation of a text image, in this case part of a "W", and Figure 3B illustrates the boundary between a screened portion and a flat tint portion of an image.

In operation, a microprocessor 2 scans the image data from the store 1 in successive, vertical columns pixel by pixel (step 11). At each pixel or target point, the microprocessor compares the pixel at the target point with its immediate vertical neighbours to determine whether the target pixel lies in the range bounded by its vertical neighbours (step 12). If it does, then it is determined that the target pixel does not constitute a turning point and the microprocessor then determines whether it has scanned all the vertical columns (step 13) and if not, moves the target point to the next pixel.

If the target point pixel value does not lie in the range bounded by its vertical neighbours then this point could constitute a turning point. This is determined further in a step 14 in which the pixel value is compared with the immediately neighbouring horizontal pixel values. Once again, if the pixel value does lie in the range bounded by these horizontal neighbours then a turning point is not indicated and processing returns to step 13. However, if the pixel value does lie outside the range bounded by the horizontal neighbours then a turning point is indicated and the location of this turning point is recorded in a turning point map in the store 3 (step 15). The stores 1,3 and the microprocessor 2 are all connected to a data bus 4 as shown in Figure 1. The turning point map in the store 3 has the same number of data locations as there are pixels in the original image.

These steps are then repeated for every pixel in the image so that a full, turning point map is stored in the store 3.

As an example of this process, consider Figure 3A where it will be seen that the only pixel value which does lie outside the ranges defined by its neighbouring horizontal and vertical pixel pairs is the underlined value 224. This is characteristic of a text image which has relatively few turning points.

In comparison, Figure 3B illustrates in the half-tone (screened) section a relatively large number of turning points but in the flat tint section, no turning points.

Once this initial determination step has been completed, the turning point map is scanned in a series of horizontal rows starting at the beginning of the map (step 16). At each pixel or target point (step 17) the number of turning points in a window centred on the target point is determined (step 18). For example, a window having dimensions of 3 x 3 pixels may be considered. If the number of turning points within the window is greater than a threshold (step 19) the target point or pixel itself is marked on the image type map as a point in a screened region (step 20). Alternatively, if the number of turning points is not greater than the threshold the target point pixel is marked differently to indicate that it is a non-screened region on the image type map (step 21). In this example, the threshold is set at 4 and Figures 4A and 4B illustrate by underlining the final form of the turning point map. After each target point has been considered, the microprocessor 2 determines whether the full turning point map has been scanned (step 22) and if not processing returns to step 17.

In one example, each pixel which is determined in either discrimination stage to constitute a turning point may be labelled with a digital 1 and all others with a digital 0.

It can be seen from viewing Figures 4A and 4B that the different types of region are immediately apparent. Thus, the screened region contains a very large number of turning points whereas the text region of Figure 4A and the flat tint region of Figure 4B have no turning points.

The map values finally stored in the store 3 can then be used during subsequent processing of the original pixel values as shown in Figure 3. For example, if the data in the store 1 is to be compressed, the microprocessor 2 can access the turning point map in the store 3 at the same time as the pixel data in the store 1 and apply a compression algorithm on the pixel data depending on the type of image representation concerned.

## Claims

1. A method of discriminating between regions of an image, the image being represented by values defining the colour component content of pixels of the image, characterised in that the method comprises comparing a value from each pixel with those of its neighbours to locate pixels whose values define turning points; and discriminating (20) between regions of the image by obtaining the number of turning points present in the region; comparing the number of turning points with a predetermined threshold, and thereby defining the region according to the result of the comparison.

2. A method according to claim 1, wherein the turning points comprise one or more of maxima, minima and saddle points.

3. A method according to claim 1 or claim 2, wherein the comparison step is carried out by comparing (12,14) the digital value of the pixel with its immediate neighbours.

4. A method according to any of the preceding claims further comprising following the comparison step, generating (15) a turning point map of the image in which each pixel has one of two values depending on whether it has been found to define a turning point or not.

5. A method according to claim 4, wherein all pixels in the map corresponding to pixels which are found not to define a turning point are set to zero while those pixels corresponding to pixels found to define turning points are set to a non-zero value.

6. A method according to any of the preceding claims, wherein the discriminating step comprises passing a window of predetermined dimensions across the image, at each position of the window counting the number of turning points within the window, comparing the number of turning points within the window with a threshold, and, if the threshold is exceeded, causing the pixel or pixels at the centre of the window to be indicated (20) as a point in a screened region.

7. Apparatus for discriminating between regions of an image, the image being represented by values defining the colour component content of pixels of the image, characterised in that the apparatus comprises first comparison means (2) for comparing a value from each pixel with those of its neighbours to locate pixels whose values define turning points; and discrimination means (2) for discriminating between regions of the image by obtaining the number of turning points present in the region; second comparison means for comparing the number of turning points with a predetermined threshold, whereby the region is defined according to the result of the comparison.

8. Apparatus according to claim 7, in which the first comparison means and discrimination means comprise a microprocessor (2) in conjunction with a pair of stores (1,3).

## Patentansprüche

1. Verfahren zum Unterscheiden von Bildbereichen, wobei das Bild von Werten bestimmt ist, die den Farbkomponenteninhalt der Bildpixel definieren, dadurch gekennzeichnet, daß jeweils ein Pixelwert mit den entsprechenden Werten der benachbarten Pixel verglichen wird, um die Pixel zu bestimmen, deren Werte Wendepunkte definieren, und daß zwischen Bildbereichen unterschieden wird (20), indem die Anzahl der in dem Bereich vorhandenen Wendepunkte bestimmt wird, daß die Anzahl der Wendepunkte mit einem vorbestimmten Schwellwert verglichen wird und dadurch der Bereich entsprechend dem Vergleichsergebnis definiert wird.

2. Verfahren nach Anspruch 1, bei dem die Wendepunkte aus einem oder mehreren maximalen, minimalen und Sattelpunkten bestehen.

3. Verfahren nach Anspruch 1 oder 2, bei dem der Vergleichsschritt dadurch ausgeführt wird, daß der digitale Pixelwert mit seinen unmittelbaren Nachbarn verglichen wird (12,14).

4. Verfahren nach einem der vorhergehenden Ansprüche, bei dem nach dem Ausführen des Vergleichsschrittes eine Wendepunkttabelle des Bildes erzeugt wird (15), in der jedes Pixel einen von zwei Werten besitzt, abhängig davon, ob festgestellt wurde, ob es einen Wendepunkt definiert oder nicht.

5. Verfahren nach Anspruch 4, bei dem alle Pixel in der Tabelle den Pixeln entsprechen, von denen festgestellt wurde, daß sie keinen Wendepunkt definieren, auf Null gesetzt werden, während jene Pixel den Pixel entsprechen, von denen festgestellt wurde, daß sie Wendepunkte definieren, auf einen von Null unterschiedlichen Wert gesetzt werden.

6. Verfahren nach einem der vorhergehenden Ansprüche, bei dem zum Ausführen des Unterscheidungsschrittes ein Fenster bestimmter Abmessungen über das Bild geführt wird, in jeder Position des Fensters die Anzahl der Wendepunkte innerhalb des Fensters gezählt wird, die Anzahl der Wendepunkte innerhalb des Fensters mit einem Schwellwert verglichen wird und bei Überschreiten des Schwellwertes das/die Pixel im Mittelpunkt des Fensters als Punkt in einem gerasteten Bereich angezeigt wird (20).

7. Einrichtung zum Unterscheiden von Bildbereichen, wobei das Bild von Werten bestimmt ist, die den Farbkomponenteninhalt der Bildpixel definieren, dadurch gekennzeichnet, daß erste Vergleichsmittel (2) vorgesehen sind, von denen jeweils ein Pixelwert mit den entsprechenden Werten benachbarter Pixel verglichen wird, und Unterscheidungsmittel (2) vorgesehen sind, von denen zwischen Bildbereichen unterschieden wird, indem die Anzahl der in dem Bereich vorhandenen Wendepunkte bestimmt wird, sowie zweite Vergleichsmittel, von denen die Anzahl der Wendepunkte mit einem vorbestimmten Schwellwert verglichen wird, und dadurch der Bereich entsprechend dem Vergleichsergebnis definiert wird.

8. Einrichtung nach Anspruch 7, bei der die ersten Vergleichsmittel und die Unterscheidungsmittel einen Mikroprozessor (2) in Verbindung mit zwei Speichern (1,3) aufweisen.

## Revendications

1. Procédé permettant de distinguer entre les régions d'une image, l'image étant représentée par des valeurs définissant la teneur en composantes colorées des éléments, ou pixels, de l'image, caractérisé en ce qu'il comprend les opérations consistant à comparer une valeur de chaque pixel avec celles des pixels voisins pour localiser les pixels dont les valeurs définissent des points de virage ; et à distinguer (20) entre les régions de l'image grâce à l'obtention du nombre de points de virage présents dans la région ; à comparer le nombre de points de virage avec un seuil prédéterminé, et à définir, en conséquence, la région en fonction du résultat de la comparaison.

2. Procédé selon la revendication 1, où les points de virage comprennent un ou plusieurs points de maximum, de minimum et de col.

3. Procédé selon la revendication 1 ou 2, où on effectue l'opération de comparaison en comparant (12, 14) la valeur numérique du pixel avec celles de ses voisins immédiats.

4. Procédé selon l'une quelconque des revendications précédentes, comprenant en outre, à la suite de l'opération de comparaison, l'opération consistant à produire (15) une carte de points de virage de l'image dans laquelle chaque pixel possède l'une de deux valeurs, selon qu'il est apparu comme définissant ou non un point de virage.

5. Procédé selon la revendication 4, où tous les pixels de la carte qui correspondent à des pixels qui sont apparus comme ne définissant pas un point de virage sont positionnés à zéro, tandis que les pixels qui correspondent aux pixels apparus comme définissant des points de virage sont positionnés à une valeur non nulle.

6. Procédé selon l'une quelconque des revendications précédentes, où l'opération de distinction entre régions comprend les opérations consistant à faire passer une fenêtre de dimensions prédéterminées sur l'image, à compter, en chaque position de la fenêtre, le nombre de points de virage compris à l'intérieur de la fenêtre, à comparer à un seuil le nombre de points de virage contenus à l'intérieur de la fenêtre, et, si le seuil est dépassé, à faire que le ou les pixels se trouvant au centre de la fenêtre soient désignés (20) comme un point d'une région tramée.

7. Appareil permettant de distinguer entre les régions d'une image, l'image étant représentée par des valeurs définissant la teneur en composantes colorées des pixels de l'image, caractérisé en ce qu'il comprend un premier moyen de comparaison (2) servant à comparer une valeur de chaque pixel avec celles de ses voisins afin de localiser les pixels dont les valeurs définissent des points de virage ; et un moyen de distinction (2) servant à distinguer entre les régions de l'image grâce à l'obtention du nombre de points de virage présents dans la région; un deuxième moyen de comparaison servant à comparer le nombre de points de virage avec un seuil prédéterminé, de façon à définir la région en fonction du résultat de la comparaison.

8. Appareil selon la revendication 7, dans lequel le premier moyen de comparaison et le moyen de distinction comprennent un microprocesseur (2) fonctionnant en liaison avec une paire de mémoires (1, 3).
